# EUROPÄISCHE PATENTANMELDUNG

(11) **EP 1 054 289 A2**
(43) Veröffentlichungstag der Anmeldung: **22.11.2000**
(21) Anmeldenummer: 00110369.6
(22) Anmeldetag: 15.05.2000
(51) Int. Cl.: G02F 1/153, G02F 1/17, E06B 9/24

(54) **Scheibenanordnung mit veränderlicher Lichtdurchlässigkeit**

(30) Priorität: 19.05.1999 DE 19922973
(71) Anmelder: Schwab, Armin Dr.-Ing., 86681 Fünfstetten (DE)
(72) Erfinder: Schwab, Armin Dr.-Ing., 86681 Fünfstetten (DE)
(74) Vertreter: Schlimme, Wolfram, Dr.-Ing.

(57) **Zusammenfassung**

Bei einer lichtdurchlässigen Scheibenanordnung mit vorgegebener Einbauausrichtung mit zumindest einer lichtdurchlässigen Trägerschicht (2) und zumindest zwei Schichten (3, 4) aus einem Material mit veränderbaren Transmissionseigenschaften für sichtbares Licht und/oder Wärmestrahlung, wobei sich die Schichten flächenartig erstrecken und wobei die jeweilige Schicht (3, 4) parallel zueinander angeordnete Streifen (3', 3'', 4', 4'') aus dem Material mit veränderbaren Transmissionseigenschaften aufweist, sind die Schichten (3, 4) in Flächennormalrichtung voneinander beabstandet.

## Beschreibung

Die Erfindung betrifft eine lichtdurchlässige Scheibenanordnung gemäß dem Oberbegriff des Anspruchs 1.

Die US 4,877,675 offenbart eine derartige Scheibenanordnung mit zwei benachbarten Schichten, die ein Material mit veränderbaren Transmissionseigenschaften aufweisen. Aufgabe dieser bekannten Scheibenanordnung ist das Erzielen einer vollständigen Lichtundurchlässigkeit. Die Schichten bestehen aus zwei parallel zueinander angeordneten Stegdoppelplatten, wobei in die Hohlräume der Stegdoppelplatten ein Gel aus einem Material mit veränderbaren Transmissionseigenschaften eingefüllt ist. Diese Stegdoppelplatten liegen unmittelbar aufeinander, sodaß die Stege der einen Platte auf einer Kammer der anderen Platte zu liegen kommen. Diese Anordnung ermöglicht eine totale Abschattung, nämlich auch das Vermeiden eines Lichtdurchtritts durch die Stege der Stegdoppelplatten. Eine teilweise Verschattung ist mit dieser Anordnung nicht möglich.

Ähnliche Scheibenanordnungen werden in und an Gebäuden, aber auch in Fahrzeugen eingesetzt, um gezielte Blendungserscheinungen, Verschattung und Durchsicht zu beeinflussen, aber auch eine Aufheizung des Gebäudeinnenraums oder des Fahrzeugraums durch einfallende Sonnenstrahlung herabzusetzen. Auch wird der Einfall direkt sichtbarer Sonnenstrahlung in den jeweiligen Innenraum reduziert und damit beispielsweise eine Blendwirkung bei sich im Raum befindenen Personen vermieden. Zudem lassen sich mit einer derartigen Scheibenanordnung auch allgemein die Beleuchtungs- und Verschattungsverhältnisse beeinflussen.

Es sind bereits zahlreiche lichtdurchlässige Scheibenanordnungen mit veränderbaren Transmissioneigenschaften bekannt. Beispielsweise offenbart die DE 38 07 598 A1 eine Scheibenanordnung mit zwei parallel zueinander angeordneten transparenten Scheiben, auf deren einander zugewandten Flächen jeweils eine gitterartige Beschichtung mit erhöhten Reflexionseigenschaften aufgebracht ist. Eine der Scheiben ist stationär angeordnet und die andere ist verschiebbar, so daß die einzelnen Gitterstabelemente entweder in Deckung ausgerichtet werden können oder versetzt zueinander angeordnet werden können, wobei die Scheibenanorndung bei versetzter Anordnung lichtundurchlässig ist und bei Ausrichtung in Deckung lichtdurchlässig ist. Eine derartige Scheibenanordnung ist wegen der sich relativ zueinander bewegenden Scheiben kompliziert im Aufbau und damit in der Herstellung teuer.

Ein Beispiel für eine Glasscheibe mit vollfächiger Beschichtung mittels einer Schicht aus elektrochromem Material ist beispielsweise aus der DE 35 31 443 A1 bekannt. Diese Scheibe hat jedoch den Nachteil, daß sie sich bei Aktivierung der elektrochromen Schicht gleichmäßig und vollständig verdunkelt. So wird zwar der Einfall von Sonnenstrahlung herabgesetzt, gleichzeitig wird aber auch das in den Raum im Gebäude oder im Fahrzeug eintretende Licht in seiner Gesamtheit stark reduziert, so daß es erforderlich sein kann, im Gebäuderaum künstliches Licht einzuschalten, obwohl es draußen taghell ist.

Aufgabe der vorliegenden Erfindung ist es daher, eine lichtdurchlässige Scheibenanordnung mit veränderbaren Transmissionseigenschaften für sichtbares Licht und/oder Wärmestrahlung anzugeben, die einerseits wirksam das Eindringen von direkter, blendender Sonnenstrahlung herabsetzt, andererseits aber die Verdunkelung des jeweiligen Innenraumes in vertretbaren Grenzen hält und ausreichend Tageslicht hindurchläßt. Es ist auch ein Ziel der Erfindung, eine lichtdurchlässige Scheibenanordnung anzugeben, die eine individuell vorgebbare Steuerung der Beleuchtungs- und Verschattungsverhältnisse ermöglicht.

Diese Aufgabe wird durch die im Anspruch 1 angegebene lichtdurchlässige Scheibenanordnung gelöst.

Durch die beiden streifenartigen, in Flächennormalrichtung voneinander beabstandeten Schichten aus dem Material mit veränderbaren Transmissionseigenschaften ist es möglich, indem einzelne Streifen selektiv in ihrer Transmissionseigenschaft verändert werden, eine Abschirmwirkung zu erzielen, die für eine Reflexion und/oder Absorption von Strahlung sorgt, welche unter einem ersten Einfallswinkel auf die Scheibe auftritt, während ein Durchblick durch die Scheibe unter einem anderen Winkel und damit auch ein Durchtritt von Streulicht durch die Scheibenanordnung ohne weiteres möglich ist. Hierdurch wird die direkte Blendung von sich im Innenraum befindenden Personen durch Sonnenstrahlung verhindert, während sowohl ein Tageslichteinfall in den Innenraum als auch ein Durchschauen durch die Scheibenanordnung möglich sind.

Die erfindungsgemäße Scheibenanordnung gestattet es auch, die Beleuchtungs- und Verschattungsverhältnisse individuell einzustellen, indem beispielsweise nur ein vorgegebener Bereich der Scheibe mit den streifenartigen Schichten aus dem Material mit veränderbaren Transmissionseigenschaften versehen ist oder indem die streifenartigen Schichten nur in einem vorgegebenen Bereich aktiviert werden.

Bevorzugt ist die Trägerschicht als ebene Tafel ausgebildet, sie kann aber auch eine sphärisch gekrümmte oder kantig geformte Gestalt aufweisen.

In den Unteransprüchen sind vorteilhafte Weiterbildungen der Erfindung angegeben, wobei insbesondere vorteilhaft ist, wenn zwei Schichten vorgesehen sind, die auf zwei voneinander abgewandten Flächen der lichtdurchlässigen Trägerschicht angeordnet sind.

Alternativ dazu können aber auch zwei voneinander beabstandete lichtdurchlässige Trägerschichten vorgesehen sein, bei denen die Schichten jeweils auf einander zugewandten Flächen der lichtdurchlässigen Trägerschichten angeordnet sind.

In einer weiteren alternativen Ausgestaltung sind mehrere lichtdurchlässige Trägerschichten und mehr als zwei Schichten vorgesehen, wobei die Schichten auf voneinander beabstandeten Flächen der lichtdurchlässigen Trägerschichten angeordnet sind. Diese Ausführungsform gestattet es, durch Aktivierung von unterschiedlich beabstandeten Schichten eine optimale Anpassung an den Einfallswinkel der zu reflektierenden Strahlung vorzunehmen.

Vorteilhaft ist außerdem, wenn die Streifen aus dem Material mit veränderbaren Transmissionseigenschaften im wesentlichen waagerecht angeordnet sind, wenn die Scheibe sich in ihrer vorgegebenen Einbauausrichtung befindet. Diese waagerechte Anordnung der Streifen ist insbesondere bei sehr hoch stehender Sonne und damit bei einem steilen Einfallswinkel der Strahlen und auch bei im wesentlichen senkrecht oder unter stumpfen Winkel (in der Horizontalebene gemessen) auf die Scheibenanordnung einfallenden Strahlen vorteilhaft.

Vorzugsweise ist die Einbauausrichtung der Scheibenanordnung senkrecht.

In einer alternativen Ausführungsform, die vorzugsweise für Schrägfenster geeignet ist, ist die vorgegebene Einbauausrichtung schräg und die Scheibe ist für ein Dachfenster ausgebildet.

In einer einfachen Ausführungsform ist die Scheibenanordnung so ausgebildet, daß das Material mit veränderbaren Transmissionseigenschaften bei Sonneneinstrahlung selbsttätig die Transmission herabsetzt und die Refelxion erhöht. Dies kann beispielsweise durch phototrope Schichten erreicht werden, wobei die zur Außenseite gerichtete Schicht entweder unveränderbar ist, so daß die Streifen beispielsweise auf den Träger mittels Siebdruck aufgedruckt sind und wobei die Streifen der weiter innen liegenden Schicht automatisch von der Rest-Sonneneinstrahlung aktiviert werden.

Besonders bevorzugt ist jedoch, wenn das Material mit veränderbaren Transmissionseigenschaften ein elektrochromes Material ist, das durch Anlegen einer elektrischen Spannung die Transmission herabsetzt und die Reflexion erhöht. Diese Ausgestaltungsform gestattet ein individuelles Anpassen der Reflexions- und Transmissionseigenschaften an den jeweiligen Einsatzfall.

Vorteilhafterweise ist dazu eine Steuereinrichtung für das elektrochrome Material vorgesehen, die einen Strahlungssensor aufweist, wobei die Transmissionseigenschaften dann in Abhängigkeit von der vom Strahlungssensor empfangenen Strahlungsintensität gesteuert werden.

Es ist außerdem vorteilhaft, wenn die Breite der einzelnen Streifen veränderbar ist, indem mehrere nebeneinander gelegene Streifen zu einem Mehrfachstreifen zusammengefaßt sind. Hierdurch kann eine Anpassung an den Einfallswinkel der direkten Sonnenstrahlung vorgenommen werden.

Vorzugsweise besteht die Schicht aus elektrochromem Material aus einer Vielzahl von parallel paarweise nebeneinander angeordneten Streifen oder Mehrfachstreifen, wobei jeder Streifen bzw. jeder Mehrfachstreifen eines Paares einzeln zur Veränderung seiner Transmissionseigenschaften ansteuerbar ist.

Dabei sind bevorzugt jeweils erste Streifen oder Mehrfachstreifen und jeweils zweite Streifen oder Mehrfachstreifen der einzelnen Paare der Streifen oder Mehrfachstreifen aus elektrochromem Material abwechselnd nebeneinander angeordnet und die ersten Streifen oder Mehrfachstreifen und die zweiten Streifen oder Mehrfachstreifen sind jeweils gemeinsam zur Veränderung der jeweiligen Transmissionseigenschaften ansteuerbar. Auf diese Weise wird eine Art Doppeljalousie mit abwechselnd reflektierenden und transmittierenden Streifen geschaffen.

Sind die streifenförmigen Schichten aus elektrochromem Material in Gruppen angeordnet, die jeweils individuell ansteuerbar und damit in ihren Transmissioneigenschaften veränderbar sind, so können die streifenförmigen Schichten der Scheibenanordnung bei Bedarf auch nur bereichsweise aktiviert werden.

In einer vereinfachten Ausführungsform können die Schichten aus dem Material mit veränderbaren Transmissionseigenschaften auch nur in einem Teilbereich der Scheibenanordnung vorgesehen sein.

Zum Schutz der Schicht aus dem Material mit veränderbaren Transmissionseigenschaften gegen äußere mechanische Einwirkungen, beispielsweise durch Regen oder Hagel oder andere mechanische Einflüsse, kann auf jeder der außen an der lichtdurchlässigen Trägerschicht vorgesehenen Schichten eine Schutzschicht aus einem lichtdurchlässigen Material aufgebracht sein.

Die Erfindung wird nachfolgend anhand eines Beispiels unter Bezugnahme auf die Zeichnung näher erläutert. In dieser zeigt:
- Fig. 1: eine erfindungsgemäße Scheibe für den vertikalen Einbau,
- Fig. 2: eine erfindungsgemäße Scheibe für einen Schrägfenstereinbau, zum Beispiel in einem Dachfenster,
- Fig. 3: eine erfindungsgemäße Scheibenanordnung, die einer Direkteinstrahlung von Strahlenbündeln von unterschiedlichen Einfallswinkeln ausgesetzt ist und
- Fig. 4a und b: eine erfindungsgemäße Scheibenanordnung mit drei Schichten unter unterschiedlichen Einfallswinkeln der Direktstrahlung.

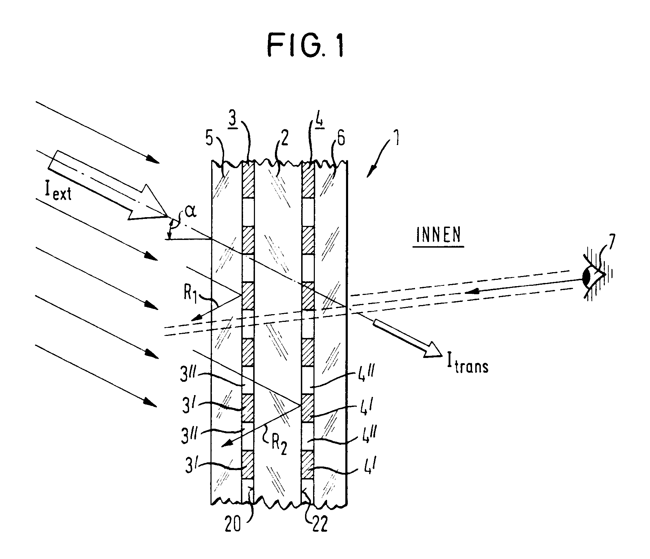

In Fig. 1 ist eine erfindungsgemäße lichtdurchlässige Scheibenanordnung dargestellt. Diese Scheibenanordnung 1 umfaßt eine mittlere lichtdurchlässige Trägerschicht 2, beispielsweise eine Glastafel. Auf beiden Oberflächen, 20, 22 der lichtdurchlässigen Trägerschicht 2 ist jeweils eine Schicht 3, 4 aus einem Material mit veränderbaren Transmissionseigenschaften für sichtbares Licht und/oder für Wärmestrahlung aufgebracht.

Die Schichten 3, 4 bestehen im vorliegenden Beispiel aus einem elektrochromen Material, welches seine Transmissionseigenschaften für Licht und/oder Wärmestrahlung beim Anlegen einer elektrischen Spannung an die Schicht 3, 4 verändert. Zum Schutz der Schichten 3, 4 aus elektrochromen Material sind eine äußere lichtdurchlässige Trägerschicht 5 auf der äußeren Schicht 3 und eine innere lichtdurchlässige Trägerschicht 6 auf der inneren Schicht 4 angebracht, so daß die äußere Schicht 3 aus elektrochromem Material zwischen der mittleren lichtdurchlässigen Trägerschicht 2 und der äußeren lichtdurchlässigen Trägerschicht 5 und die innere Schicht 4 aus elektrochromem Material zwischen der mittleren lichtdurchlässigen Trägerschicht 2 und der inneren lichtdurchlässigen Trägerschicht 6 eingeschlossen ist.

Jede der beiden elektrochromen Schichten 3, 4 ist gitterartig mit im wesentlichen waagerecht angeordneten, übereinander gelegenen und einander abwechselnden Streifen 3', 3'' aus elektrochromem Material ausgebildet, wobei die Streifen 3', 3'' gegeneinander isoliert und einzeln ansteuerbar sind. Auf diese Weise ist es möglich, das Transmissionsverhalten eines jeden Streifens 3', 3'' individuell durch Anlegen einer elektrischen Spannung zu beeinflussen. Ein jeder Streifen 3', 3'' kann auch als Mehrfachstreifen ausgebildet sein, der jeweils eine Mehrzahl von nebeneinander gelegenen Streifen 3' oder 3'' umfaßt. Im vorliegenden Beispiel sind die Streifen 3', 3'' jeweils in Gruppen einander abwechselnder Streifen zusammengefaßt, sodaß eine erste Gruppe von Streifen 3' und eine zweite Gruppe von Streifen 3'' jeweils gemeinsam ansteuerbar sind.

Die innere elektrochrome Schicht 4 ist in gleicher Weise aufgebaut wie die äußere elektrochrome Schicht 3 und weist ebenfalls eine erste Gruppe von Streifen 4' und eine zweite Gruppe von Streifen 4'' auf, die ebenfalls auch jeweils als Mehrfachstreifen ausgebildet sein können, wobei die Breite der Mehrfachstreifen in den Schichten 3, 4 unterschiedlich sein kann.

Abweichend von diesem Beispiel können beliebige Anzahlen von nebeneinandergelegenen Streifen oder Mehrfachstreifen zu Gruppen zusammengefaßt sein. So ist es beispielsweise möglich, erste, zweite, dritte und vierte Streifen zu bestimmen, die jeweils mit sich daran anschließenden ersten, zweiten, dritten und vierten Streifen zu Gruppen von ersten, zweiten, dritten und vierten Streifen zusammengefaßt sind. Auch ist es denkbar, in der äußeren Schicht 3 eine andere Anzahl von Gruppen zu bilden als in der inneren Schicht 4, so daß beispielsweise in der äußeren Schicht Gruppen von ersten, zweiten, dritten und vierten Streifen gebildet sind, während in der inneren Schicht Gruppen von ersten, zweiten und dritten Streifen gebildet sind. Die Auswahl der Anzahl unterschiedlicher Gruppen in der jeweiligen Schicht ist, ebenso wie die Breite der einzelnen Streifen bzw. Mehrfachstreifen, eine Entscheidung des Fachmanns bei der Auslegung der erfindungsgemäßen Scheibenanordnung.

Im Beispiel der Fig. 1 sind die ersten Streifen 3' der äußeren eletrochromen Schicht 3 von gleicher Breite wie die zweiten Streifen 3'' der äußeren elektrochromen Schicht. Es ist jedoch auch möglich, die Breite der einzelnen Streifen 3' bzw. 3'' unterschiedlich festzulegen. Die Anordnung der Steifen 4' und 4'' der inneren elektrochromen Schicht 4 sowie die Breite der einzelnen Streifen 4', 4'' entspricht im Beispiel jener der äußeren elektrochromen Schicht 3, obwohl, wie bereits ausgeführt, auch unterschiedliche Dimensionierungen zwischen der inneren elektrochromen Schicht 4 und der äußeren elektrochromen Schicht 3 vorgesehen sein können. Auch innerhalb der inneren Schicht 4 kann die Breite der Streifen 4' bzw. 4'' unterschiedlich sein.

Die in Fig. 1 dargestellte lichtdurchlässige Scheibenanordnung 1 ist für den Einsatz in einem sich senkrecht erstreckenden Fenster vorgesehen. Dazu liegen jeweils die ersten Streifen 3' der äußeren elektrochromen Schicht 3 in Horizontalrichtung gesehen den jeweiligen ersten Streifen 4' der inneren elektrochromen Schicht 4 so gegenüber, daß die einzelnen Streifen 3', 4' miteinander fluchten. Folglich sind auch die zweiten Streifen 3'' der äußeren elektrochromen Schicht 3 und die zweiten Streifen 4'' der inneren elektrochromen Schicht 4 in Horizontalrichtung miteinander ausgerichtet. Im in Fig. 1 gezeigten Beispiel sind jeweils die erste Gruppe von Streifen 3' der äußeren elektrochromen Schicht 3 und die erste Gruppe von Streifen 4' der inneren elektrochromen Schicht 4 derart angesteuert, daß das Transmissionsverhalten der jeweiligen Streifen 3', 4' stark herabgesetzt ist und folglich deren Reflexionsverhalten stark heraufgesetzt worden ist.

Unter einem Winkel α auf die lichtdurchlässige Scheibenanordnung 1 eintreffende Sonnenstrahlung Iₑₓₜ wird zunächst teilweise von den Streifen 3' der äußeren elektrochromen Schicht 3 mit hohen Reflexionseigenschaften reflektiert (Pfeil R₁). Der durch die Streifen 3'' der äußeren elektrochromen Schicht 3 mit niedrigen Reflexions- und hohen Transmissionseigenschaften hindurchtretende Anteil der Strahlung Iₑₓₜ wird zum erheblichen Teil an den Streifen 4' mit hohen Reflexionseigenschaften der inneren elektrochromen Schicht 4 reflektiert und tritt durch einen Streifen 3'' mit hohen Transmissionseigenschaften der äußeren elektrochromen Schicht 3 wieder nach außen. Dieser Vorgang ist durch den Pfeil R₂ dargestellt.

Auf diese Weise tritt nur ein Bruchteil der auf die lichtdurchlässige Scheibenanordnung 1 auftretenden Sonnenstrahlung Iₑₓₜ durch die Scheibenanordnung hindurch. Dieser hindurchtretende Teil ist in Fig. 1 mit Iₜᵣₐₙₛ bezeichnet.

Obwohl die unmittelbar einfallende Sonnenstrahlung durch den vorstehend geschilderten Aufbau der erfindungsgemäßen lichtdurchlässigen Scheibenanordnung 1 wieder nach außen reflektiert wird, ist die Scheibenanordnung 1 nicht vollständig verdunkelt, da durch die horizontal miteinander ausgerichteten Streifen 3'', 4'' mit hoher Transmission der äußeren elektrochromen Schicht 3 und der inneren elektrochromen Schicht 4 genügend Licht, beispielsweise Streulicht, in den in Fig. 1 rechts der Scheibenanordnung 1 gelegenen Innenraum hindurchtreten kann, um den Innenraum ausreichend zu erhellen. Des weiteren ist es für einen sich im Innenraum befindenden Betrachter, der in Fig. 1 symbolisch durch das Auge 7 dargestellt ist, (ebenso wie für einen außenstehenden Betrachter) möglich, durch die lichtdurchlässige Scheibenanordnung 1 hindurchzusehen, ohne jedoch durch die Sonnenstrahlung geblendet zu werden.

Die Aktivierung der Streifen 4' der inneren elektrochromen Schicht kann in Abhängigkeit vom Einfallswinkel α der Sonnenstrahlung gesteuert werden, so daß auf der inneren elektrochromen Schicht 4 jeweils nur diejenigen Streifen aktiviert werden, auf die die durch die äußere elektrochrome Schicht 3 hindurchtretenden Sonnenstrahlen auftreffen. Dabei kann die Ansteuerung der einzelnen Streifen 4' bzw. 4'' der inneren elektrochromen Schicht 4 durch den jeweiligen Streifen zugeordnete Sensoren (nicht gezeigt) über eine Steuerelektronik vorgenommen werden. In gleicher Weise ist es auch möglich, die Streifen der äußeren elektrochromen Schicht 3 über entsprechende Sensoren anzusteuern. Die Streifen der äußeren Schicht können in einer einfacheren Ausführungsform aber auch nichtveränderbar sein und beispielsweise mittels Siebdruck auf die Trägerschicht 2 aufgebracht sein.

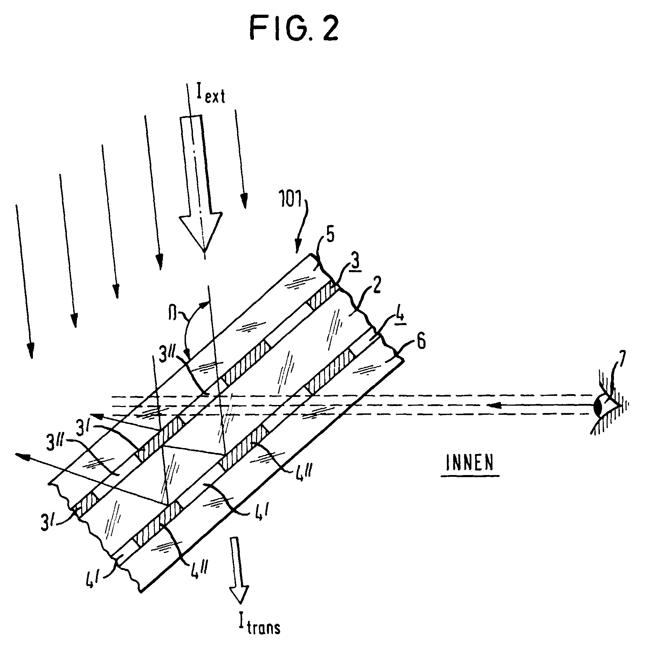

In Fig. 2 ist eine alternative Ausführungsform gezeigt, bei der die lichtdurchlässige Scheibenanordnug 101 schräg gestellt ist, wie dies beispielsweise in einem Dachfenster der Fall ist. In Fig. 2 ist eine Situation gezeigt, in der der Einfallswinkel β der Sonnenstrahlung steiler ist als in Fig. 1. Auch in diesem Beispiel ist die Scheibenanordnung in gleicher Weise aus drei lichtdurchlässigen Trägerschichten 2, 5, 6 sowie zwei elektrochromen Schichten 3, 4 aufgebaut wie im Beispiel der Fig. 1. Wegen der Schrägstellung der Scheibenanordnung 101 sind bei diesem Beispiel jedoch die Streifen 3' der äußeren elektrochromen Schicht 3 und die auf Lücke dazu stehenden Schichten 4'' der inneren elektrochromen Schicht 4 angesteuert, so daß die horizontale Sicht durch diese schräggestellte Scheibenanordnung 101 möglich ist, während der Einfall der direkten Sonnenstrahlung Iₑₓₜ wie im Beispiel der Fig. 1 größtenteils verhindert ist.

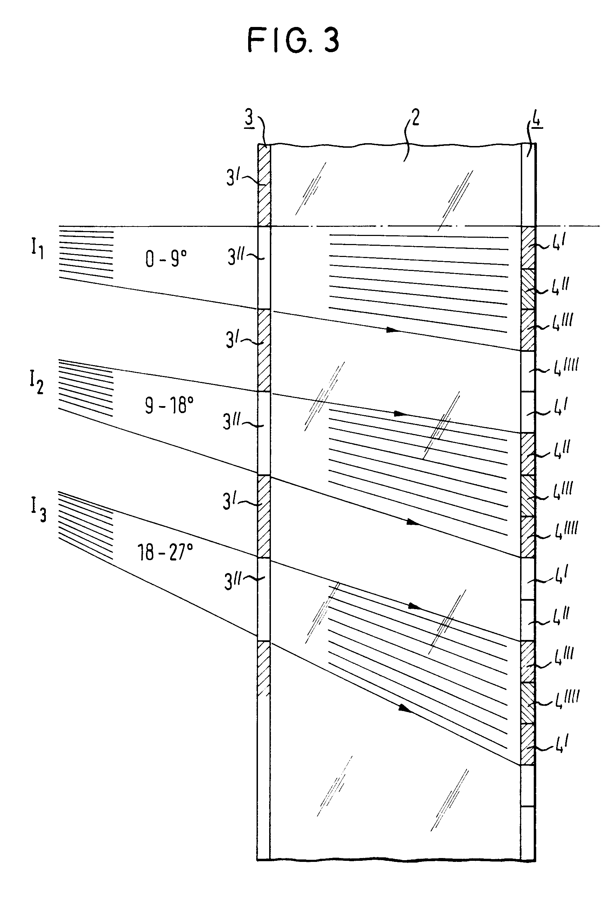

In Fig. 3 ist eine erfindungsgemäße Scheibenanordnung mit einer lichtdurchlässigen Trägerschicht 2, einer äußeren Schicht 3 und einer inneren Schicht 4 jeweils aus einem Material mit veränderbaren Transmissionseigenschaften gezeigt. Die einzelnen Streifen 3', 3'' der äußeren Schicht 3 sind breiter als die jeweiligen Streifen 4', 4'', 4''', 4'''' der inneren Schicht 4. Die Streifen der inneren Schicht 4 sind so aktivierbar, daß eine Mehrzahl von nebeneinandergelegenen Streifen zu einer aktivierten Streifengruppe zusammengefaßt sind. Die aktivierten Streifen sind in Fig. 3 jeweils druch Schraffur dunkel dargestellt.

Das obere Strahlenbündel I₁ der Fig. 3 deckt Direkteinstrahlung unter Einfallswinkeln von 0° bis 9° ab. Bei diesem Strahleneinfall sind die dem nicht aktivierten äußeren Streifen 3'' unmittelbar fluchtend gegenübergelegenen inneren Streifen 4' und 4'' sowie der darunter angeordnete innere Streifen 4''' aktiviert, so daß das Eindringen von Direktstrahlung in den auf der rechten Seite der Fig. 3 liegenden Innenraum verhindert ist.

Das mittlere in Fig. 3 dargestellte Strahlenbündel I₂ deckt einen Einfallswinkelbereich von 9° bis 18° ab. In diesem Fall werden der der unteren Hälfte des nicht aktivierten äußeren Streifens 3'' fluchtend gegenübergelegene Streifen 4'' der inneren Schicht 4 sowie die beiden unter diesem gelegenen Streifen 4''' und 4'''' aktiviert, um einen Einfall von Direktstrahlung in den Innenraum zu verhindern.

Das untere Strahlenbündel in Fig. 3 fällt unter Einfallswinkeln zwischen 18° und 27° auf die Scheibenanordnung ein. In diesem Fall sind die beiden dem nicht aktivierten äußeren Streifen 3'' fluchtend gegenübergelegenen inneren Streifen 4' und 4'' nicht aktiviert, jedoch die daruntergelegenen folgenden Streifen 4''', 4'''' und 4'.

Die Fig. 3 zeigt somit, wie durch Zusammenfassung unterschiedlicher nebeneinandergelegener Streifen der inneren Schicht eine Anpassung der Abschattung an den Einfallswinkel der Direktstrahlung möglich ist.

Bei der Ausführungsform der Fig. 3 ist die Breite eines Streifens 4', 4'', 4''', 4'''' der inneren Schicht 4 halb so groß wie die Breite eines Streifens 3', 3'' der äußeren Schicht 3. Durch die Art der Aktivierung der inneren und äußeren Streifen in Fig. 3 ist eine horizontale Durchsicht von maximal 25 Prozent möglich. Um die horizontale Durchsicht bei gleichzeitiger Optimierung des Blendschutzes zu maximieren, ist es anzustreben, die Unterteilung der raumseitigen inneren Schicht möglichst groß zu machen, das heißt also deren Streifenbreite möglichst klein zu machen.

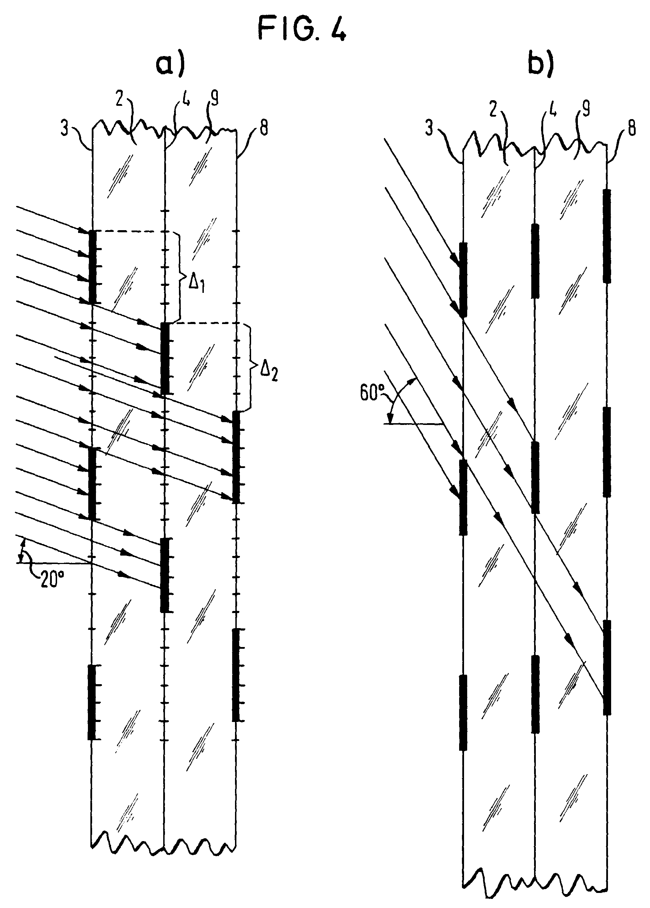

Fig. 4a und 4b zeigen ebenfalls die Abschattung bei unterschiedlichen Einfallswinkeln von 20° (Fig. 4a) und 60° (Fig. 4b). Bei der Ausführungsform nach der Fig. 4 sind jedoch drei Schichten 3, 4 und 8 vorgesehen, die jeweils durch Trägerschichten 2, 9 aus lichtdurchlässigem Material voneinander getrennt sind. Auch bei dieser Ausführungsform sind die Streifen der einzelnen Schichten 3, 4, 8 zu Gruppen von Streifen zusammengefaßt, wobei die Streifen je nach Einfallswinkel, ähnlich wie dies in bezug auf Fig. 3 beschrieben worden ist, unter Anpassung an den Einfallswinkel der Direktstrahlung aktiviert werden. Bei dieser Ausführungsform ist beim Strahlungseinfallswinkel von 20° (Fig. 4a), der einem für die Winterzeit typischen Sonnehöhenwinkel entspricht, in der äußeren Schicht 3 nur jede dritte, jeweils aus vier nebeneinanderliegenden Streifen bestehende Streifengruppe aktiviert. In der mittleren Schicht 4 ist ebenfalls nur jede dritte, ebenfalls aus jeweils vier Streifen bestehende Streifengruppe aktiviert, wobei eine Vertikalverschiebung Δ₁ von fünf Streifen zwischen der äußeren Schicht 3 und der mittleren Schicht 4 vorgesehen ist.

In der inneren Schicht 8 besteht eine aktivierte Streifengruppe zur Ausblendung von Streiflicht aus fünf Streifen, wobei die Vertikalverschiebung zwischen der Oberkante eines aktivierten Streifens der mittleren Schicht 4 und der inneren Schicht 8 von Δ₂ = 5 Streifen beträgt. Zur Ausblendung von Streiflicht kann sich die fünf Streifen umfassende Gruppe auch auf jeder der beiden anderen Schichten befinden. Da jede Streifengruppe der inneren Schicht 8 aus fünf aktivierten Streifen besteht, ist der danach folgende Zwischenraum aus nichtaktivierten Streifen um einen Streifen geringer als in der mittleren Schicht 4 und in der äußeren Schicht 3. Durch diese zusätzliche Aktivierung eines weiteren Streifens in der inneren Schicht 8 ist abhängig vom Sonnenhöhenwinkel und der hierfür optimalen Streifenaktivierung eine maximale Durchsicht von innen nach außen von bis zu 7/12 gegeben.

Zur Ausblendung von Streulicht sind bei n Streifen auf einer der mindestens zwei Schichten n + 1 Streifen zu aktivieren.

In der Fig. 4b ist der gleiche Aufbau wie in Fig. 4a gezeigt, wobei der Strahlungseinfallswinkel 60° beträgt, welcher typisch ist für den Sonnenhöhenwinkel auf dem 50. Breitengrad in der Sommerzeit. Auch bei dieser Ausführungsform ist in der inneren Schicht 8 ein Streifen mehr aktiviert als in der äußeren Schicht 3 und der mittleren Schicht 4; lediglich die Lage der aktivierten Schichten ist gegenüber Fig. 4a verändert und an den steileren Strahlungseinfallswinkel angepaßt.

Die Breite der einzelnen Streifen kann kleiner sein als die Dicke der jeweiligen benachbarten Trägerschicht. Die Dicke der Trägerschicht kann im Bereich von 1 mm bis 10 mm liegen, wie dies beispielsweise bei herkömmlichen Verglasungen im Baubereich üblich ist. Es sind aber auch Mikrostrukturen möglich, bei denen die Dicke der Trägerschicht unter 1 mm beträgt und bei der die Streifen entsprechend klein und fein aufzubringen sind. Weiterhin ist es aber ebenso möglich, Makrostrukturen zu schaffen, bei denen die Trägerschicht größer als 10 mm ist. Damit könnten räumliche Gitter entstehen, die ab einer gewissen Dicke anstelle der tafelartigen Trägerschicht eine Kombination aus Trägerschicht und Luftschicht oder einem anderem Stoff oder Medium aufweisen. Der Zwischenraum zwischen benachbarten Trägerschichten beziehungsweise zwischen Trägerschicht und benachbarter Schicht aus dem Material mit veränderbaren Transmissionseigenschaften kann zudem mit Gas, Fluid oder einem Solid gefüllt sein. Gas- oder fluidgefüllte Zwischenräume können außerdem auch durchströmt sein.

Für die Realisierung der vorliegenden Erfindung zum Zwecke der Verschattung oder der Blendungsreduzierung ist es weiterhin vorteilhaft, die Dimensionierung der einzelnen Streifen so zu wählen, daß Beugungserscheinungen an den Streifen verhindert werden.

Die vorliegende Erfindung kann grundsätzlich aber auch zur Erreichung von besonderen optischen Effekten so ausgestaltet sein, daß Beugungs- oder Brechungserscheinungen des auf die Scheibenanordnung auftreffenden oder durch sie hindurchtretenden Lichtes gezielt herbeigeführt werden, um damit ästhetische Wirkungen zu erzielen.

So kann die Anordnung benachbarter Streifen zur Erzeugung von besonderen ästhetischen Effekten beispielsweise so gewählt sein, daß die Streifen nichtparallel und/oder nichtäquidistant angeordnet sind, um entweder ein homogenes, gleichförmiges oder ein inhomogenes, ungleichförmiges Licht-Schatten-Muster auf der von der Beleuchtungsseite abgewandten Seite der Scheibenanordnung zu schaffen.

Selbstverständlich ist es ebenfalls möglich, durch gezielte Aktivierung der Streifen ästhetische Effekte durch bewußt herbeigeführte Reflexionserscheinungen mit überlagerten Beugungs- und/oder Brechungseffekten auch auf der Beleuchtungsseite der Scheibenanordnung zur erzielen. Die Streifen können entweder konstante Dicke beziehungsweise Breite, aber auch beliebig wechselnde Dicke beziehungsweise Breite aufweisen, wobei es nicht erforderlich ist, daß hintereinander oder nebeneinander benachbarte Streifen jeweils einen gleichen Dicken- beziehungsweise Breitenverlauf besitzen.

Neben linear angeordneten Streifen können auch beliebige kurvenförmige, fächerartige oder konzentrische Streifenmuster realisiert werden, wobei es nicht erforderlich ist, daß die Streifen zweier hintereinander angeordneter Streifenanordnungen, also die Streifen in zwei benachbarten Schichten, jeweils gleiche Grundgeometrien besitzen. So kann beispielsweise eine Ausführung aus einem außenseitigen, der Einstrahlungsseite zugewandten, linearen Streifenmuster und einem in Strahlungsrichtung gesehen dahinter befindlichen konzentrischen Streifenaufbau bestehen.

Durch Auswahl der Streifengeometrie und des Streifenmaterials, also des Materials der Trägerschichten, können beliebige optische Eindrücke erzeugt werden. So können bewußt optische Effekte wie zum Beispiel Interferenz, Brechung oder Beugung des einstrahlenden Lichts an den Streifen der unterschiedlichen Schichten aus Material mit veränderbaren Transmissionseigenschaften erzeugt werden. Dabei kann beispielsweise auch zusätzlich das Licht in einer Ebene polarisiert werden oder gefiltert werden.

Bei diesen vorstehenden Ausführungsformen der Erfindung ist es somit möglich, durch beliebig vorgebbare Aktivierung von Streifen oder Streifenanordnungen oder entsprechende beliebige Beeinflussungen der Schichten aus Material mit veränderbaren Transmissionseigenschaften gesteuert vorgebbare optisch-ästhetische Wirkungen einer solchen Scheibenanordnung zu erzielen.

Die Erfindung ist nicht auf die obigen Ausführungsbeispiele beschränkt, die lediglich der allgemeinen Erläuterung des Kerngedankens der Erfindung dienen. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Lichtdurchlässige Scheibenanordnung mit vorgegebener Einbauausrichtung mit zumindest einer lichtdurchlässigen Trägerschicht (2) und zumindest zwei Schichten (3, 4) aus einem Material mit veränderbaren Transmissionseigenschaften für sichtbares Licht und/oder Wärmestrahlung,
- wobei sich die Schichten flächenartig erstrecken und
- wobei die jeweilige Schicht (3, 4) parallel zueinander angeordnete Streifen (3', 3'', 4', 4'') aus dem Material mit veränderbaren Transmissionseigenschaften aufweist,
dadurch **gekennzeichnet,**
daß die Schichten (3, 4) in Flächennormalrichtung voneinander beabstandet sind.

2. Lichtdurchlässige Scheibenanordnung nach Anspruch 1,
dadurch **gekennzeichnet,**
daß zwei Schichten (3, 4) vorgesehen sind, die auf zwei voneinander abgewandten Flächen (20, 22) der lichtdurchlässigen Trägerschicht (2) angeordnet sind.

3. Lichtdurchlässige Scheibenanordnung nach Anspruch 1,
dadurch **gekennzeichnet,**
daß zwei voneinander beabstandete lichtdurchlässige Trägerschichten vorgesehen sind und daß die Schichten (3, 4) jeweils auf einander zugewandten Flächen der lichtdurchlässigen Trägerschichten angeordnet sind.

4. Lichtdurchlässige Scheibenanordnung nach Anspruch 1,
dadurch **gekennzeichnet,**
daß mehrere lichtdurchlässige Trägerschichten und mehr als zwei Schichten vorgesehen sind und daß die Schichten auf voneinander beabstandeten Flächen der lichtdurchlässigen Trägerschichten angeordnet sind.

5. Lichtdurchlässige Scheibenanordnung nach einem der vorhergehenden Ansprüche,
dadurch **gekennzeichnet**,
daß die Streifen (3', 3'', 4', 4'') aus dem Material mit veränderbaren Transmissionseigenschaften im wesentlichen waagerecht angeordnet sind, wenn sich die Scheibe (1; 101) in ihrer vorgegebenen Einbauausrichtung befindet.

6. Lichtdurchlässige Scheibenanordnung nach einem der vorhergehenden Ansprüche,
dadurch **gekennzeichnet,**
daß die vorgegebene Einbauausrichtung vertikal ist.

7. Lichtdurchlässige Scheibenanordnung nach einem der Ansprüche 1 bis 5,
dadurch **gekennzeichnet,**
daß die vorgegebene Einbauausrichtung schräg ist und daß die Scheibe (101) für ein Dachfenster ausgebildet ist.

8. Lichtdurchlässige Scheibenanordnung nach einem der vorhergehenden Ansprüche,
dadurch **gekennzeichnet,**
daß das Material mit veränderbaren Transmissionseigenschaften bei Sonneneinstrahlung selbsttätig die Transmission herabsetzt und die Reflexion erhöht.

9. Lichtdurchlässige Scheibenanordnung nach einem der Ansprüche 1 bis 7,
dadurch **gekennzeichnet,**
daß das Material mit veränderbaren Transmissionseingenschaften ein Material mit einer steuerbaren Lichttransmission, insbesondere ein elektrochromes Material, ist, das durch Anlegen einer elektrischen Spannung die Transmission herabsetzt und die Reflexion erhöht,
wobei vorzugsweise eine Steuereinrichtung für das Material mit einer steuerbaren Lichttransmission vorgesehen ist, die einen Strahlungssensor aufweist und
daß die Transmissionseigenschaften in Abhängigkeit von der vom Strahlungssensor empfangenen Strahlungsintensität steuerbar sind und/oder wobei vorzugsweise die Breite der einzelnen Streifen (3', 3'', 4', 4'') veränderbar ist, indem mehrere nebeneinander gelegene Streifen zu einem Mehrfachstreifen zusammenfaßbar sind.

10. Lichtdurchlässige Scheibenanordnung nach Anspruch 9,
dadurch **gekennzeichnet,**
daß die Schicht (3, 4) aus Material mit einer steuerbaren Lichttransmission aus einer Vielzahl von parallel paarweise nebeneinander angeordneten Streifen oder Mehrfachstreifen (3', 3'', 4', 4'') besteht, wobei jeder Streifen bzw. jeder Mehrfachstreifen (3', 3'', 4', 4'') eines Paares einzeln zur Veränderung seiner Transmissionseigenschaften ansteuerbar ist, wobei vorzugsweise jeweils erste Streifen oder Mehrfachstreifen (3', 4') und jeweils zweite Streifen oder Mehrfachstreiffen (3'', 4'') der einzelnen Paare der Streifen oder Mehrfachstreifen aus Material mit einer steuerbaren Lichttransmission abwechselnd nebeneinander angeordnet sind und daß die ersten Streifen oder Mehrfachstreifen (3', 4') und die zweiten Streifen oder Mehrfachstreifen (3'', 4'') jeweils gemeinsam zur Veränderung der jeweiligen Transmissionseigenschaften ansteuerbar sind.

11. Lichtdurchlässige Scheibenanordnung nach Anspruch 9 oder 10,
dadurch **gekennzeichnet,**
daß die streifenförmigen Schichten (3, 4) aus Material mit einer steuerbaren Lichttransmission in Gruppen angeordnet sind, die jeweils individuell ansteuerbar und damit in ihren Transmissionseigenschaften veränderbar sind.

12. Lichtdurchlässige Scheibenanordnung nach einem der vorhergehenden Ansprüche,
dadurch **gekennzeichnet**,
daß die Schichten (3, 4) aus dem Material mit veränderbaren Transmissionseigenschaften nur in einem Teilbereich der Scheibenanordnung (1; 101) vorgesehen sind.

13. Lichtdurchlässige Scheibenanordnung nach Anspruch 3,
dadurch **gekennzeichnet,**
daß auf jeder der außen an der lichtdurchlässigen Trägerschicht (2) vorgesehenen Schichten (3, 4) eine Schutzschicht (5, 6) aus einem lichtdurchlässigen Material aufgebracht ist.

14. Lichtdurchlässige Scheibenanordnung nach einem der vorhergehenden Ansprüche,
dadurch **gekennzeichnet,**
daß die dem Innenraum zugewandte Rückseite zumindest einer der Schichten aus dem Material mit veränderbaren Transmissionseigenschaften reflektierend ausgebildet ist.

15. Lichtdurchlässige Scheibenanordnung nach einem der Ansprüche 1 bis 14,
dadurch **gekennzeichnet,**
daß die dem Innenraum zugewandte Rückseite zumindest einer der Schichten aus dem Material mit veränderbaren Transmissionseigenschaften nichtreflektierend ausgebildet ist.

16. Lichtdurchlässige Scheibenanordnung nach einem der vorhergehenden Ansprüche,
dadurch **gekennzeichnet,**
daß die Schichten aus dem Material mit veränderbaren Transmissionseigenschaften auf jeweils gleichem Höhenniveau beginnen.

17. Lichtdurchlässige Scheibenanordnung nach einem der vorhergehenden Ansprüche,
dadurch **gekennzeichnet,**
daß die Schichten aus dem Material mit veränderbaren Transmissionseigenschaften auf einem Folienträger vorgefertigt ausgebildet sind.

18. Lichtdurchlässige Scheibenanordnung nach einem der vorhergehenden Ansprüche,
dadurch **gekennzeichnet,**
daß die erste, äußere Schichten aus dem Material mit veränderbaren Transmissionseigenschaften ein Material mit einer steuerbaren Lichttransmission, insbesondere ein elektrochromes Material, aufweist und daß die innere(n) Schicht(en) aus dem Material mit veränderbaren Transmissionseigenschaften ein Material mit passiver Anpassung der Lichttransmission, insbesondere ein phototropes oder photochromes Material aufweist.

19. Lichtdurchlässige Scheibenanordnung nach einem der vorhergehenden Ansprüche,
dadurch **gekennzeichnet,**
daß die als elektrochrome Schichten ausgebildeten Schichten aus dem Material mit veränderbaren Transmissionseigenschaften durch photovoltaische Elemente aktivierbar sind.

20. Lichtdurchlässige Scheibenanordnung nach einem der vorhergehenden Ansprüche,
dadurch **gekennzeichnet,**
daß eine sensorgesteuerte Regeleinrichtung vorgesehen ist, mittels derer jeweils die zur vollständigen Ausblendung von Direktstrahlung erforderlichen Streifen der einzelnen Schichten automatisch individuell ansteuerbar sind.

21. Lichtdurchlässige Scheibenanordnung nach einem der vorhergehenden Ansprüche,
dadurch **gekennzeichnet**,
daß eine Vielzahl von gering voneinander beabstandeten streifenförmig untergliederten Schichten aus dem Material mit veränderbaren Transmissionseigenschaften in der Scheibenanordnung vorgesehen sind.

22. Lichtdurchlässige Scheibenanordnung nach einem der vorhergehenden Ansprüche,
dadurch **gekennzeichnet**,
daß die Breite der einzelnen Streifen kleiner ist als die Dicke der jeweiligen benachbarten Trägerschichten.

23. Lichtdurchlässige Scheibenanordnung nach einem der vorhergehenden Ansprüche,
dadurch **gekennzeichnet,**
daß bei n Streifen auf einer der mindestens zwei
Schichten n + 1 Streifen aktiviert werden.
